# EUROPÄISCHE PATENTSCHRIFT

(11) **EP 1 250 997 B1**
(45) Veröffentlichungstag und Bekanntmachung des Hinweises auf die Patenterteilung: **30.11.2005**
(21) Anmeldenummer: 02008019.8
(22) Anmeldetag: 10.04.2002
(51) Int. Cl.: B29C 67/00

(54) **Vorrichtung zum Herstellen eines dreidimensionalen Objekts**
Manufacturing device for three-dimensional object
Dispositif pour la production d'un objet en trois dimensions

(30) Priorität: 20.04.2001 DE 20106887 U
(43) Veröffentlichungstag der Anmeldung: 23.10.2002
(73) Patentinhaber: Envisiontec GmbH, 45768 Marl (DE)
(72) Erfinder: John, Hendrik, 46569 Hünxe (DE)
(74) Vertreter: Prüfer, Lutz H.

(56) Entgegenhaltungen:
- DE-U- 9 319 405
- US-A- 5 447 822
- US-A- 6 027 324
- PATENT ABSTRACTS OF JAPAN vol. 1996, no. 11, 29. November 1996 (1996-11-29) & JP 08 192469 A (USHIO INC), 30. Juli 1996 (1996-07-30)

## Beschreibung

Die Erfindung betrifft eine Vorrichtung zum Herstellen eines dreidimensionalen Objekts nach dem Patentanspruch 1.

Eine Vorrichtung nach dem Oberbegriff des Patentanspruches 1 ist aus der DE 93 19 405 U1 bekannt.

Es ist Aufgabe der Erfindung, eine Vorrichtung zum Herstellen eines dreidimensionalen Objekts bereitzustellen, die eine verbesserte praktische Handhabbarkeit aufweist und daher eine höhere Produktivität ermöglicht.

Die Aufgabe wird gelöst durch eine Vorrichtung gemäß Patentanspruch 1.

Weiterbildungen der Erfindung sind in den Unteransprüchen angegeben.

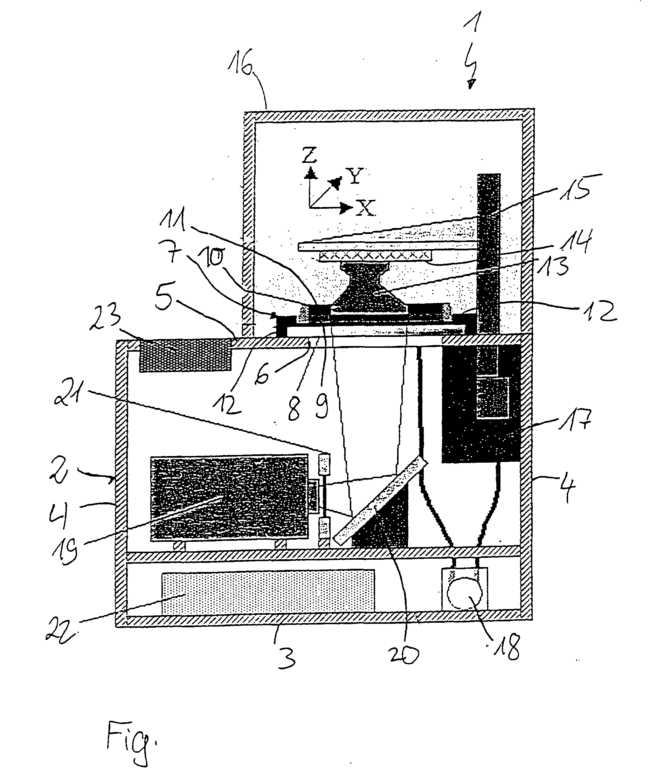

Es folgt die Beschreibung eines Ausführungsbeispieles der Erfindung anhand der Figur.

Die Figur zeigt eine schematische Schnittansicht der Vorrichtung.

Die Vorrichtung 1 zum Herstellen eines dreidimensionalen Objekts weist ein Gehäuse 2 auf mit einem Boden 3, Seitenwänden 4 und einer Deckenwand 5. In der Deckenwand 5 ist ein Fenster 6 vorgesehen. Außerhalb des Gehäuses 2 ist eine das Fenster 6 überdeckende Polymerisationswanneneinheit 7 angeordnet. Die Polymerisationswanneneinheit 7 besteht aus einer für sichtbares Licht transparenten Bodenplatte 8, die etwas größere Abmessungen als das Fenster 6 aufweist, so daß dieses vollständig überdeckt ist. Die transparente Bodenplatte 8 ist beispielsweise aus Glas oder Plexiglas gebildet. Auf der dem Fenster 6 abgewandten Seite der transparenten Bodenplatte 8 ist eine die eigentliche Polymerisationswanne 7 bildende elastische Schicht 9, beispielsweise in Form einer Silikonbeschichtung aufgebracht, die sich über den das Fenster 6 überdeckenden Bereich der transparenten Bodenplatte 8 erstreckt und die an ihrem Rand 10 von der transparenten Platte 9 wegsteht, so daß der Rand gleichzeitig den Rand einer Polymerisationswanne zur Aufnahme eines flüssigen, unter Einwirkung von Licht polymerisierbaren Materials 11 bildet. Entscheidend ist, daß die elastische Schicht 9 aus einem Material gebildet ist, an dem das polymerisierbare Material 11 nach der Polymerisation weniger stark anhaftet als an der transparenten Bodenplatte 8. Die Höhe des Randes beträgt in dieser Ausführungsform etwa einige Millimeter. Die transparente Bodenplatte 8 und die als Polymerisationswanne 7 ausgebildete elastische Trennschicht 9 sind über Befestigungselemente 12 miteinander verbunden und als Polymerisationswanneneinheit 7 an der Deckenwand 5 des Gehäuses 2 befestigt. Die Befestigung ist dabei so ausgebildet, daß die Polymerisationswanneneinheit 7 leicht abnehmbar und austauschbar ist. Zum Halten des zu bildenden Objektes 13 ist eine Trägerplattform 14 vorgesehen, die über eine Höhenverstelleinrichtung 15 in vertikaler Richtung auf- und abverschiebbar ist. Die Trägerplattform 14 ist so ausgebildet und ansteuerbar, daß sie sich von einer Stellung am Grund der Polymerisationswanneneinheit 7 linear vertikal nach oben und wieder zurück fahren läßt. Ferner ist die Trägerplattform 14 aus einem Material gebildet, an dem das polymerisierte Material, aus dem das Objekt gebildet ist, anhaftet, so daß das zu bildende Objekt 13 beim Verschieben der Trägerplattform sich nicht ablöst. Über der Polymerisationswanneneinheit 7 und der Trägerplattform 14 mit Höhenverstelleinrichtung 15 ist eine lichtdichte Abdeckhaube 16 vorgesehen.

In dem Gehäuse 2 ist ein Vorratsbehälter 17 für das polymerisierbare Material vorgesehen, der beispielsweise in Form eines lichtdichten Beutels ausgebildet ist, und der über eine lichtdichte Leitung mit der Polymerisationswanneneinheit 7 über eine Pumpe 18 verbunden ist.

In dem Gehäuse 2 befindet sich ferner eine Belichtungs- und Projektionseinheit 19, die eine nicht dargestellte, im wesentlichen im sichtbaren Bereich emittierende Lichtquelle beinhaltet, sowie eine nicht dargestellte Maskenerzeugungseinrichtung, die in Abhängigkeit von geometrischen Schichtdaten ein Querschnittsbild des Objekts 13 in jeder Schicht erzeugt und auf die dem Wanneninneren zugewandte Seite der Schicht 9 projiziert. Die Maskenerzeugungseinrichtung ist bevorzugt als digital angesteuertes Spiegelsystem (digital mirror display) ausgebildet. Diese an sich bekannte Maskenerzeugungseinrichtung umfaßt eine große Anzahl beweglicher Mikrospiegel auf einem Chip, deren Orientierung ansteuerbar ist, so daß das auf dem Chip auftreffende Licht der Lichtquelle in gewünschter Weise abgelenkt wird und das durch die Spiegeleinstellung erzeugte Bild auf die zu belichtende Oberfläche abgebildet wird. Zum Ablenken der aus der Belichtungs- und Projektionseinheit 19 austretenden Lichtstrahlen auf die Unterseite der transparenten Bodenplatte ist ein Umlenkspiegel 20 vorgesehen. Ferner ist zum Steuern der Dauer der Belichtung eine Blendeneinheit 21, die beispielsweise als elektromechanischer Verschluß ausgebildet ist, unmittelbar am Austritt des Lichtstrahlenbündels aus der Belichtungs- und Projektionseinheit 19 angeordnet. Die Belichtungs- und Projektionseinheit 19, die Höhenverstelleinrichtung 15 und die Fördereinrichtung 18 werden über eine zentrale Rechnereinheit 22 gesteuert. Eine manuelle Bedienung ist über ein Bedienmodul 23 möglich.

Im Betrieb werden zunächst digitalisierte bzw. gerasterte geometrische Schichtdaten des zu erzeugenden Objekts 13 unter Zuhilfenahme bekannter Techniken erzeugt und an die Vorrichtung 1 übergeben. Die Polymerisationswanneneinheit 7 wird mit einem unter Einwirkung von sichtbarem Licht polymerisierendem Monomer gefüllt, und die Trägerplattform 13 wird über die Höhenverstelleinrichtung 15 in der Wanne derart positioniert, daß zwischen der Trägerplattform 14 und der transparenten Bodenplatte 8 bzw. der Trennschicht 9 ein definierter Zwischenraum bleibt, in dem sich flüssiges Monomer befindet. Dann wird bei geöffneter Blende 21 die erste Schicht belichtet, wobei das Abbild des Querschnitts des Objektes in der ersten Schicht über die Belichtungs- und Projektionseinheit 19 auf die Oberfläche der Flüssigkeit angrenzend an die Trennschicht 9 projiziert wird. Die Ansteuerung der Belichtungs- und Projektionseinheit 19 erfolgt dabei entsprechend den geometrischen Schichtdaten. Durch die Belichtung härten die belichteten Bereiche der ersten Schicht aus und haften an der Trägerplattform 14. Die Dauer der Belichtung wird über die Blende 21 gesteuert. Nach Beendigung des Belichtungszyklusses wird die Blende 21 geschlossen und die Trägerplattform 14 vertikal nach oben verfahren und für die nächste Schicht positioniert. Dabei löst sich der polymerisierte Bereich der ersten Schicht von der Schicht 9, und neues Material fließt in den entstehenden Freiraum bzw. Spalt nach. Nun erfolgt wieder ein Belichtungszyklus entsprechend dem Querschnitt des Objekts in dieser Schicht. Die beschriebenen Vorgänge werden wiederholt, bis das Objekt 13 fertiggestellt ist. Abschließend wird die Trägerplattform 14 mit dem Objekt aus dem Bauraum entnommen, das Objekt gereinigt und von der Trägerplattform 14 getrennt. Bei Bedarf kann das Objekt nachgehärtet werden. Nach erfolgtem Bauprozeß wird die Polymerisationswanneneinheit 7 aus der Vorrichtung entfernt und gereinigt. Zwischenzeitlich kann eine zweite Polymerisationswanneneinheit eingesetzt werden und somit schon mit dem nächsten Bauprozeß begonnen werden. Damit wird die Produktivität erhöht und es können unterschiedliche Materialien verwendet werden. Ein weiterer Vorteil besteht darin, daß aufgrund der Belichtung von unten die Polymerisationswanne mit einem niedrigen Rand ausgebildet werden kann. Damit kann, insbesondere bei Objekten, deren Höhe größer ist als der Rand der Polymerisationswanne, Material gespart werden kann.

In einer abgewandelten Ausführungsform ist die Belichtungs-/Projektionseinheit anstelle eines Mikrospiegelsystem mit einem Flüssigkristallprojektor (LCD-Projektor) ausgestattet.

## Patentansprüche

1. Vorrichtung zur Herstellung eines dreidimensionalen Objekts durch schichtweises Verfestigen eines flüssigen, unter Einwirkung von Licht verfestigbaren Materials (11) an dem Querschnitt des Objekts (13) entsprechenden Stellen, mit
einer Wanne (9, 10, 8; 7) zur Aufnahme des Materials,
einer Lichtquelle (19),
einer Vorrichtung (19) zum Abbilden des zu belichtenden Bereiches entsprechend dem zu verfestigenden Querschnitt des Objekts auf die Oberfläche,
einer Positioniervorrichtung (15) zum Positionieren des zu bildenden Objekts relativ zu der Wanne,
wobei die zu belichtende Oberfläche des Materials von einer transparenten Platte (8) abgedeckt ist und die transparente Platte mit einem Material beschichtet ist, an der das verfestigte Material weniger anhaftet als an der transparenten Platte,
**dadurch gekennzeichnet, daß** der Boden der Wanne und die seitlichen Wannenwände (10) durch die Schicht (9) gebildet sind.

2. Vorrichtung nach Anspruch 1, **dadurch gekennzeichnet, daß** die Schicht (9) elastisch ist.

3. Vorrichtung nach Anspruch 1 oder 2, **dadurch gekennzeichnet, daß** die transparente Platte (8) und die wannenförmig gebildete Schicht (9) in der Vorrichtung eine austauschbare Einheit (7) bilden.

4. Vorrichtung nach einem der Ansprüche 1 bis 3, **dadurch gekennzeichnet, daß** die transparente Platte (8) den Boden der Wanne bildet und daß die Belichtung von unten erfolgt.

5. Vorrichtung nach einem der Ansprüche 1 bis 4, **dadurch gekennzeichnet, daß** die Vorrichtung zum Abbilden (19) einen Multimediaprojektor mit Mikrospiegelarraytechnologie oder mit einem Flüssigkristalldisplay aufweist.

6. Vorrichtung nach einem der Ansprüche 1 bis 5, **dadurch gekennzeichnet, daß** die Höhe der Wanne kleiner sein kann als die Höhe des zu bildenden Objekts (13).

7. Vorrichtung nach einem der Ansprüche 1 bis 6, **dadurch gekennzeichnet, daß** ein elektromechanischer Verschluß (21) zum Steuern der Dauer der Belichtung vorgesehen ist.

## Claims

1. Device for manufacturing a three-dimensional object by layerwise solidification of a liquid material (11), which is solidifiable under exposure to light, at positions corresponding to the cross-section of the object (13) with
a trough (9, 10, 8; 7) for receiving the material,
a light source (19),
a device (19) for forming, on the surface, an image of the region to be exposed corresponding to the cross-section of the object to be solidified,
a positioning device (15) for positioning the object to be formed relative to the trough,
wherein the surface to be exposed of the material is covered by a transparent plate (8) and the transparent plate is coated with a material to which the solidified material adheres less than to the transparent plate,
**characterized in that** the bottom of the trough and the lateral trough walls (10) are formed by the coating (9).

2. Device according to claim 1, **characterized in that** the coating (9) is elastic.

3. Device according to claim 1 or 2, **characterized in that** the transparent plate (8) and the trough-shaped formed coating (9) form a replaceable unit (7) in the device.

4. Device according to one of claims 1 to 3, **characterized in that** the transparent plate (8) forms the bottom of the trough and the exposure is effected from below.

5. Device according to one of claims 1 to 4, **characterized in that** the device for forming the image (19) comprises a multi media projector with micro mirror array technology or with a liquid crystal display.

6. Device according to one of claims 1 to 5, **characterized in that** the height of the trough may be smaller than the height of the object to be formed (13).

7. Device according to one of claims 1 to 6, **characterized in that** an electro-mechanical shutter (21) is provided for controlling the duration of the exposure.

## Revendications

1. Dispositif pour la production d'un objet en trois dimensions, par solidification, couche par couche, d'un matériau (11) liquide, solidifiable sous l'effet de la lumière, en des emplacements correspondant à la section transversale de l'objet (13), avec une auge (9, 10, 8 ; 7) pour recevoir le matériau,
une source de lumière (19),
un dispositif (19) pour reproduire la zone, à illuminer, de manière correspondante à la section transversale à solidifier, de l'objet sur la surface,
un dispositif de positionnement (15) pour positionner l'objet à former par rapport à l'auge,
la surface illuminée du matériau étant couverte d'une plaque (8) transparente et la plaque transparente étant enduite d'une couche de matériau, sur laquelle le matériau solidifié adhère moins que sur la plaque transparente, **caractérisé en ce que** le fond de l'auge et les parois d'auge (10) latérales sont formées par la couche (9).

2. Dispositif selon la revendication 1 **caractérisé en ce que** la couche (9) est élastique.

3. Dispositif selon la revendication 1 ou 2 **caractérisé en ce que** la plaque (8) transparente et la couche (9) conformée en auge forment dans le dispositif un ensemble (7) remplaçable.

4. Dispositif selon l'une des revendications 1 à 3 **caractérisé en ce que** la plaque transparente (8) forme le fond de l'auge, et **en ce que** l'illumination se fait par le dessous.

5. Dispositif selon l'une des revendications 1 à 4 **caractérisé en ce que** le dispositif servant à reproduire (19) présente un projecteur multimédia, faisant appel à une technologie à matrice de micro-miroirs ou à un dispositif d'affichage à cristal liquide.

6. Dispositif selon l'une des revendications 1 à 5 **caractérisé en ce que** la hauteur de l'auge peut être inférieure à la hauteur de l'objet (13) à former.

7. Dispositif selon l'une des revendications 1 à 6 **caractérisé en ce qu'**un obturateur (21) électromagnétique est prévu pour commander la durée de l'illumination.
